(19) **Europäisches Patentamt / European Patent Office / Office européen des brevets**

(11) **EP 1 933 576 A1**

(12) **EUROPEAN PATENT APPLICATION**

(43) Date of publication:
**18.06.2008 Bulletin 2008/25**

(51) Int Cl.:
**H04Q 7/38** (2006.01)

(21) Application number: **06291938.6**

(22) Date of filing: **14.12.2006**

<table>
<tr><td>

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **France Télécom**
**75015 Paris (FR)**

</td><td>

(72) Inventor: **Hou, Jindong**
**W3 8LD London (GB)**

(74) Representative: **Loisel, Bertrand**
**Cabinet Plasseraud**
**52 rue de la Victoire**
**75440 Paris Cedex 09 (FR)**

</td></tr>
</table>

(54) **Method and system to enhance network neighboring map with hierarchical structure and pre-decision metrics**

(57) Improved method and system to enable improved network mobility and power management in a system with an enhanced network neighboring map with hierarchical structure and predecision metrics in a heterogeneous mobile network environment. In particular, it is provided an enhanced network neighboring map with at least a two-level hierarchical structure and pre-decision metrics, which provides more accurate and complete network neighboring information of both homogeneous and heterogeneous networks, and also provides an efficient way of accessing and managing such information.

**Two-level hierarchical NNM   100**

*AN-level Neighbour Information* — 10

AN A's NAM Table 14   |   AN B's NAM Table 16   |   AN C's NAM Table 18

12

Cell a1's NCM Table 20
Cell a2's NCM Table 22   |   Cell c1's NCM Table
Cell a3's NCM Table 24   |   Cell b1's NCM Table   |   Cell c2's NCM Table

*Cell-level Neighbour Information*

**FIG. 1**

**Description**

**FIELD OF THE INVENTION**

The invention relates to network mobility and power management. In particular, the present invention relates to providing an enhanced network neighboring map with hierarchical structure and pre-decision metrics in heterogeneous mobile network environments.

**BACKGROUND OF THE INVENTION**

The integrated network service provider in charge of multiple communication networks (e.g., mobile cellular, WLAN, PSTN, etc), require advanced mobility management and power management techniques across hybrid networks. This way, more efficient and intelligent mobility management services (network selection and handover) are offered to guarantee users the maximum of service continuity and the minimum of handover interruption. Consequently, this also improves smart power management schemes for more efficient and power-saving usage.

The problem of identifying other neighboring cells for a given cell, mainly for the purpose of handover and new cell selection, has been widely investigated. Various solutions have been advanced such as providing the mobile station with a list of possible candidates for a handover, and consequently updating the lists in each base station. For example, EP0933954 describes such a method. Others, e.g., EP1427234, aim at providing the operator with a global and centralized knowledge of the neighboring lists, and this information is obtained from calculations which consequently are not up-to-date. However, most of these solutions rely on specific technology on the mobile stations and only deal with one access network. Hence, these only provide information about the neighboring cells of the homogeneous networks.

Other solutions such as EP05290089 develops neighboring relationships of both homogeneous and heterogeneous cells across different types of networks. However, this type of solution only provides cell-level neighboring information.

Therefore, the traditional Network Neighboring Map (hereinafter "NNM") either only provides information about the neighborings of the homogeneous networks, or lacks access-network-level neighboring information and network overlapping state, which may lead to an increase of failed handover attempts and decrease of system efficiency. Moreover, existing NNM solution stores different levels of network neighboring information all together, which reduces efficiency of retrieval and management of such information.

In view of these concerns, there is a continuing need for developing a new method and system that provides more accurate and complete network neighboring information of both homogeneous and heterogeneous networks, and an efficient way of accessing and managing such information.

**SUMMARY OF THE INVENTION**

Accordingly, it is an object of the present invention to provide an improved method and system to provide an enhanced network neighboring map with at least a two-level hierarchical structure and pre-decision metrics. In particular, the invention includes a method includes storing access network-level and cell-level neighboring information in a neighboring access network map table and neighboring cell map table, respectively, which include at least a two-level hierarchical network neighboring map table, and generating and updating the two-level hierarchical network neighboring map table upon receipt of normal access network evaluation message and/or a handover instruction acknowledge access network evaluation message and/or an immediate handover access network evaluation message. The method further includes adding at least one novel information element as pre-decision metrics into the neighboring access network map table and the neighboring cell map table to improve network handover decision, and inferring an actual network overlapping relationship from the pre-decision metrics to determine whether neighboring access networks and cells are overlapped when service handover decision, power management and other system functions are requested by a user.

One or more of the following features may also be included.

In one aspect, the pre-decision metrics include an overlapping state, an immediate handover indicator and a handover probability indicative of handover occurrence from one network to another.

In yet another aspect, the method also includes adding a plurality of fields including an operator identification field, an authentication-authorization-accounting capacity field, and an access information field in the normal access network evaluation messages for intelligent handover strategy under heterogeneous network conditions.

These and other aspects of the invention will become apparent from and elucidated with reference to the embodiments described in the following description, drawings and from the claims.

## BRIEF DESCRIPTION OF THE DRAWINGS

FIG. 1 is a proposed two-level hierarchical NNM Table, showing how NCMs (Neighboring Cell Maps) and NAMs (Neighboring Access-network Maps) are managed according to one of the embodiments of the present invention;

FIG. 2 is a proposed Neighboring AN Map (NAM) Table, according to one of the embodiments of the present invention;

FIG. 3 is a proposed Neighboring Cell Map (NCM) Table, according to one of the embodiments of the present invention;

FIG. 4 is a schematic illustration of neighboring ANs and cells for a given network B and cell b1, according to one of the embodiments of the present invention;

FIG. 5 is a schematic illustration of a network's NAM Table for a given network B, according to one of the embodiments of the present invention;

FIG. 6 is a schematic illustration of a cell's NCM Table for a given cell b1, according to one of the embodiments of the present invention;

FIG. 7 is a flow diagram of process to create and update NNM upon the receipt of normal ANEmn message, according to one of the embodiments of the present invention;

FIG. 8 is a flow diagram of process to create and update NNM upon the receipt of immediate HI/HO Ack message, according to one of the embodiments of the present invention; and

FIG. 9 is a flow diagram of method process to deduce network-overlapping relationship, according to one of the embodiments of the present invention.

## DETAILED DESCRIPTION

In the present invention, an enhancement is proposed to Network Neighboring Map with hierarchical structure and pre-decision metrics for increased mobility and power management in both homogeneous and heterogeneous environments.

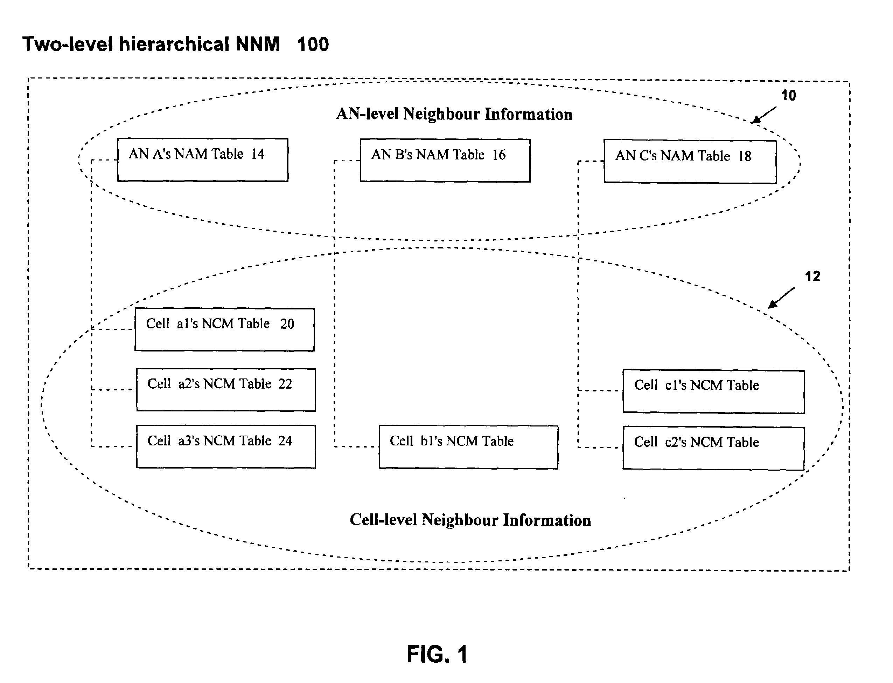

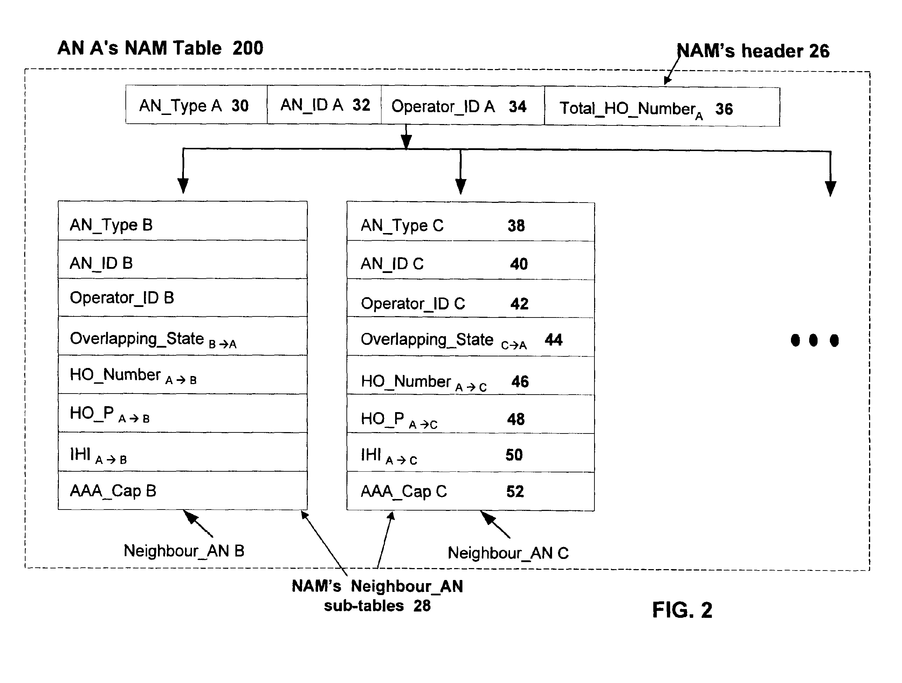

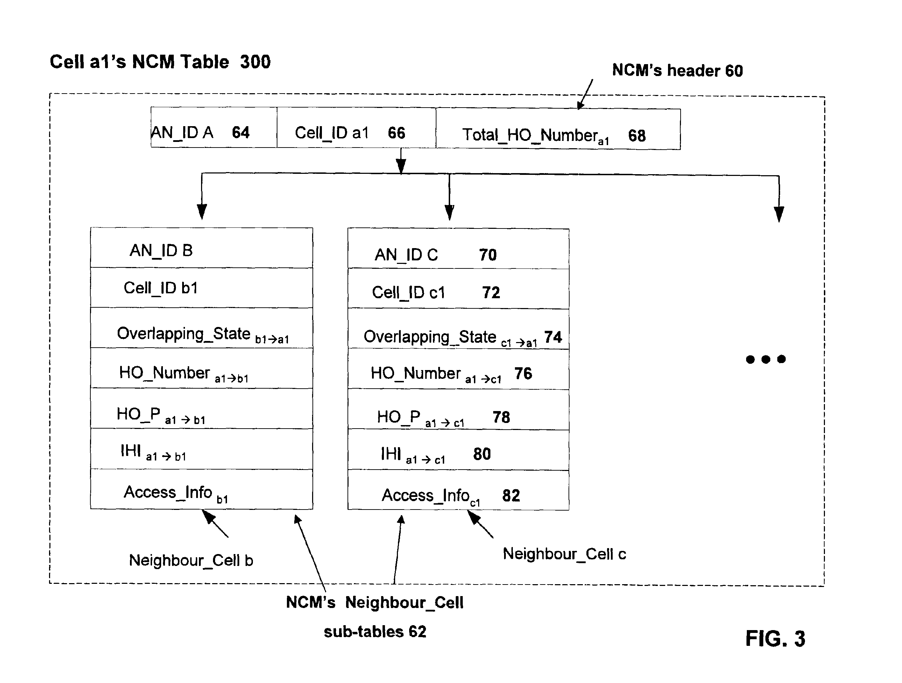

Referring to FIG. 1, a two-level hierarchical Network Neighboring Map (NNM) 100 is illustrated. The NNM 100 is enhanced with a novel hierarchical structure, which has two-level neighboring information, namely, the first level represents the neighboring relationships among different Access Networks ("ANs"), and the second level represents the neighboring relationship among different cells. The NNM 100 represents the neighboring relationship between all networks and all cells of both homogeneous and heterogeneous networks, and is composed of all Neighboring AN Map Tables 10 (hereinafter "NAM tables") as well as all cells' Neighboring Cell Map Tables 12 (hereinafter "NCM tables"). Still referring to FIG. 1, the NAM Tables 10 includes AN A's NAM Table 14, AN B's NAM Table 16 and AN C's NAM Table 18, among which AN A's NAM Table is illustrated in further detail in FIG. 2, below (e.g., AN A's NAM Table 200). The NCM Tables 12 includes Cell a1's NCM Table 20, Cell a2's NCM Table 22, Cell a3's NCM Table 24 and so on, among which Cell a1's NCM Table is illustrated in further detail in FIG. 3, below (e.g. Cell a1's NCM Table 300). Moreover, one AN may be composed of multiple cells, and correspondingly, one NAM Table may be associated with multiple NCM Tables by the index of a unique AN_ID (a field in the header of both NAM and NCM Tables).

Such hierarchical fabric enables a terminal or other entity to access different levels of neighboring information according to its needs. A terminal may only need to access the first-level information to decide which network interface to power off, whereas it may need both levels of information for a handover decision process.

Referring now to FIGs. 2 and FIG. 3, the first level of network neighboring relationship among the different ANs (NAM Table 200) and the second level of cell neighboring relationship among different cells (NCM Table 300) are illustrated, respectively.

The proposed Network Neighboring Map uses the information of Access Network Evaluation (hereinafter "ANEmn") message (e.g., such as the information about current and neighboring networks' network type, network ID as well as cell/access point ID, etc...) as inputs to construct the NAM Table 200 and the NCM Table 300. For intelligent handover strategy in future heterogeneous network conditions, the ANEmn message is proposed to be modified by adding three new fields: an Operator_ID 42, a AAA_Cap 52 (Authentication, Authorization, and Accounting) and an Access_Info 82. The format are identified as follows:

- Operator_ID: uniquely identifies the network operator of a given Access Network (AN);
- AAA_Cap: represents the network Authentication, Authorization and Accounting capacities, for example, what security mechanisms are applied for accessing a given WLAN;
- Access_Info: represents necessary L1/L2 access information, e.g., physical channel, frequency, etc.

Moreover, in the NAM Table 200 and the NCM Table 300, three novel informational elements are proposed to be added into the NNM as pre-decision metrics. These consist of an overlapping state, an immediate handover indicator, and a handover indicator. They assist in examining the actual network overlap relationship and improve handover decision and power management performance by providing added intelligence as network overlap relationship and previous handover pattern. They are discussed briefly below:

Overlapping State

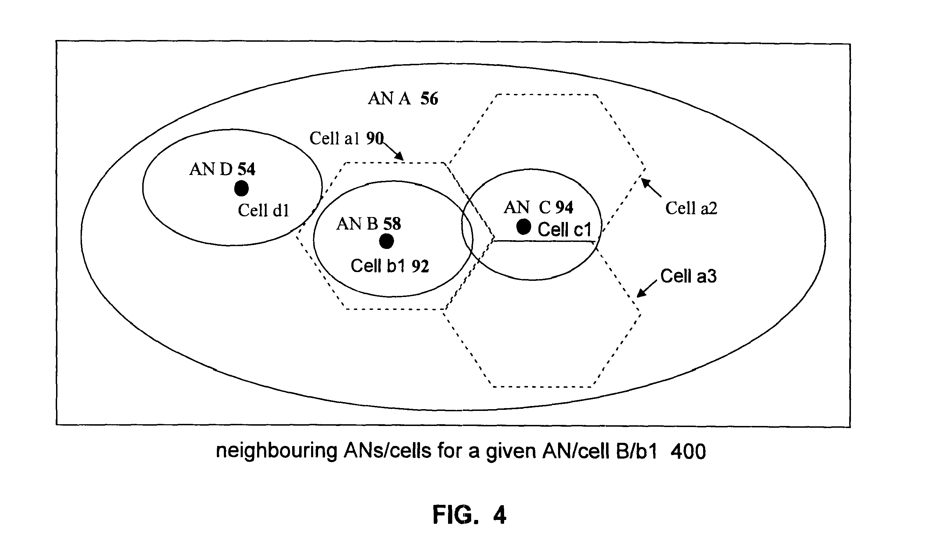

Three types of overlapping relationship exist between any two ANs: fully, partially or none. Moreover, such overlapping relationship is asymmetric. Referring to FIG. 4, network A 56 may fully overlap network B 58, but network B 58 may only partially overlap network A 56. Such network overlapping states may help improve handover decisions, power management and other system functions. For example, if a terminal is currently in the network B 58, which is fully overlapped by another network A 56, switching to the network A 56 may be a safe choice for the terminal, whenever necessary. On the other hand, the network D 54 has no overlapping area with the network B 58, so the terminal can just turn off its network D 54 interface to save power when it is in the network B 58. Here Overlapping_State$_{B \rightarrow A}$ is used to denote how the network B overlaps the network A, and has three values: FULLY, PARTIALLY and NONE.

IHI (Immediate Handover indicator)

Under some urgent conditions such as a sudden loss of current network coverage, a terminal needs to make an immediate handover decision by itself. Such emergencies very likely cause packet loss and interruptions to ongoing services. Therefore, if a significant number of immediate handover occurrences are found in the history, this scenario is likely to repeat itself. Thus, the IHI$_{A \rightarrow B}$ is proposed to show if there are immediate handover occurrences from network A to B (e.g., YES: occurred before; NO: not occurred before). It may act also as a useful indication for the terminal to prepare well in advance for any urgent handover circumstances from one network to the other.

HO P (Handover Probability)

The Handover Probabily (Ho_P) is proposed to show the likelihood of handover occurrence from one network to another. If, according to history records, there is a high handover probability from network A to network B, any terminal currently residing in network A, with such handover likelihood knowledge, may take proactive actions to optimize handover performance. Here HO_P$_{A \rightarrow B}$ represents the handover probability from the network A to B.

Referring back to FIG. 2, the NAM Table 200 is composed of a NAM header 26 and a set of Neighbour_AN sub-tables 28. In the NAM header 26 of the NAM Table 200, following fields are defined: AN_Type 30, AN_ID 32, Operator_ID 34 and Total_HO_Number 36. AN_Type 30 represents network technology, e.g., cellular (GSM) or WLAN. AN_ID 32 represents the access network identifier, e.g., it is SSID for WLAN and MCC+MNC for cellular network. The Operator_ID 34 represents the network operator identifier of the AN, and the Total_HO_Number 36 represents the total number of handovers performed and recorded from this AN to all its neighboring ANs.

In the body part of the NAM Table 200, each of its neighboringing AN(s) is recorded in a sub-table Neighbour_AN 28. In the Neighbour_AN 28, several fields are defined: AN_Type 38, AN_ID 40, Operator_ID 42, Overlapping_State 44, HO_Number 46, HO_P 48, IHI 50 and AAA_Cap 52. The definitions of AN_Type, AN_ID and Operator_ID are the same as above for a neighboringing AN. The Overlapping_State 44 represents how this neighboring AN overlaps a given AN. IHI 50 indicates whether or not any immediate handover has been done from the given AN to a neighboring AN. HO_Number 46 represents the total number of handover performed and recorded from the given AN to this neighboring AN. HO_P 48 represents the handover probability of from the given AN to this neighboring AN, and is calculated by the following formula:

$$HO\_P_{A \rightarrow B} = HO\_Number_{A \rightarrow B} \, / \, Total\_HO\_Number_A$$

Whereas A is the given AN in the NAM Table, and B is one of its neighboring AN(s), and HO_P$_{A \rightarrow B}$ represents the handover probability from the AN A to B according to historical records.

AAA_Cap 52 represent the network AAA capacities, which provides useful information for network selection.

Referring now to FIG. 3, the second level of neighboring relationship among different cells is illustrated and stored in the Neighboring Cell Map Table (NCM) 300. Each cell has its own NCM Table, which records its neighboring cell(s). Like the NAM Table 200, the NCM Table 300 is composed of a NCM header 60 and a set of Neighboring_Cell sub-tables 62. In the NCM header 60, some fields are defined: AN_ID 64, Cell_ID 66 and Total_HO_Number 68. AN_ID 64 presents the access network identifier, e.g., it is SSID for WLAN and MCC+MNC for cellular network. Cell_ID 66 presents the cell identifier, e.g., it can be the MAC address for WLAN and GCI for cellular network. Total_HO_Number 68 represents the total number of handover performed and recorded from this cell to all its neighboring cells (homogeneous and heterogeneous).

In the body part of the NCM Table 300, each of its neighboring cells is recorded in a sub-table Neighboring_ Cell 62. In the Neighboring_Cell, several fields are defined: AN_ID 70, Cell_ID 72, Overlapping_State 74, HO_Number 76, HO_P 78, IHI 80 and Access_Info 82. The AN_ID 70 and Cell_ID 72 are of the same definition for a neighboring cell. The definition of Overlapping_State 74, HO_Number 76, HO_P 78 and IHI 80 are the same of those for the NAM Table 200, except that they are about two neighboring cells rather than two neighboring ANs. HO_Number 76 represents the total number of handover performed and recorded from the given cell to this neighboring cell. Access_Info 82 represents necessary L1/L2 access information, e.g., physical channel, frequency, and the like.

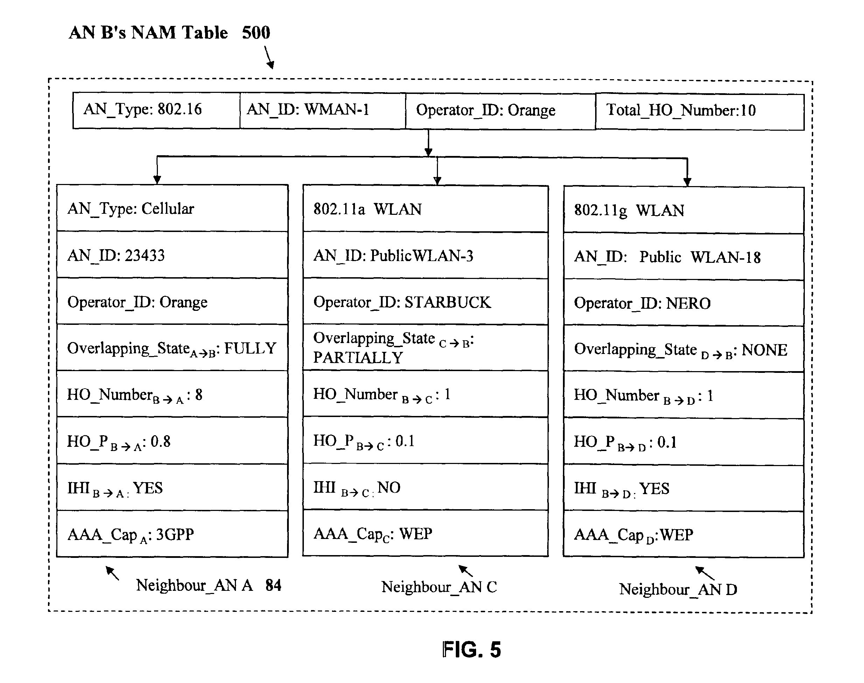

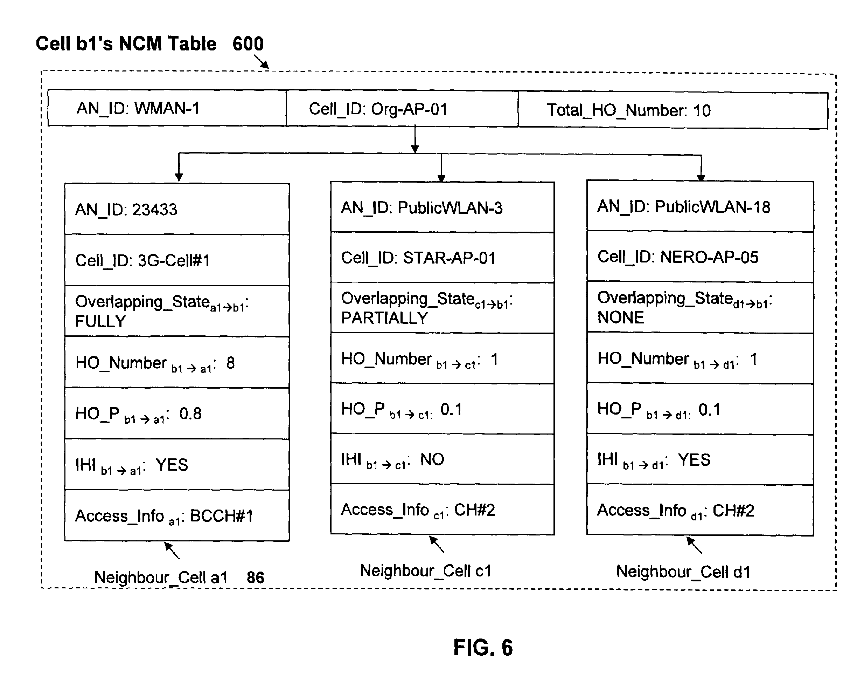

Referring now to FIGs. 5 and 6, schematic diagrams of a given network B's NAM Table and a given cell b1's NCM Table are illustrated, according to one of the embodiments of the present invention.

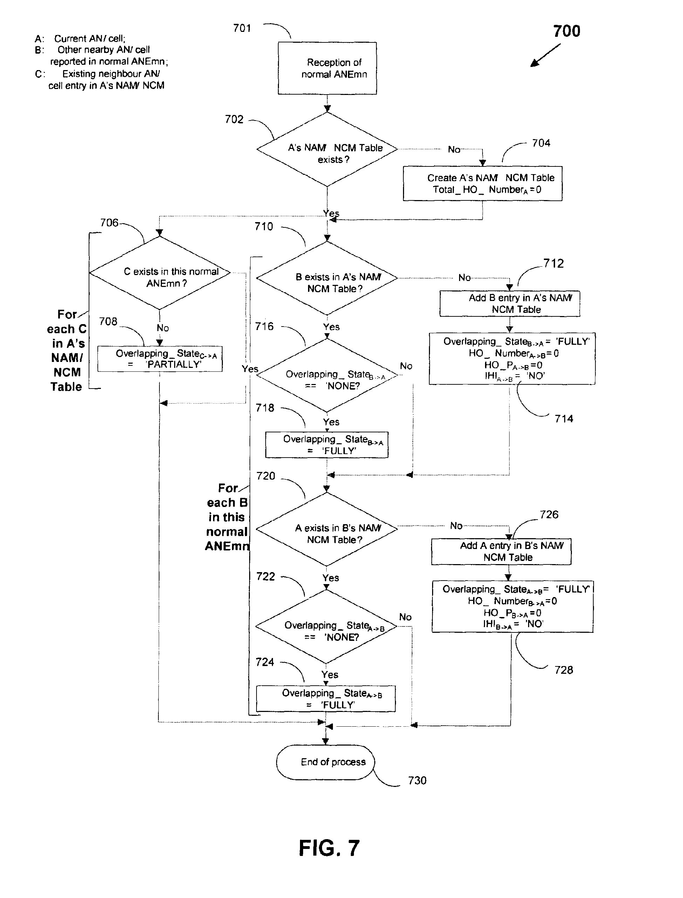

Referring to FIG. 7, a flow chart 700 illustrates the method for creating and updating a NNM Table upon the receipt of normal ANEmn messages. When a normal ANEmn message arrives (step 701), first the NAM Tables 10 and NCM Tables 12 are checked to see if the NAM/ NCM Table of the current AN/cell reported in this normal ANEmn message exists (step 702). For instance, in referring back to FIG. 1, there are three NAMs (AN A's NAM 14, AN B's NAM 16 and AN C's NAM 18) and six NCMs (i.e., Cell a1's NCM 20, Cell a2's NCM 22, Cell a3's NCM 24 etc.) in the NNM Table 100. If the current AN and cell reported in the ANEmn message are AN D and Cell d1, respectively, both have no record in the NNM Table 100. Therefore, it continues onto a step 704 to create and initialize the AN D's NAM Table and Cell d1's NCM Table. The following fields are filled with the values reported in the normal ANEmn: AN_Type, AN_ID and Operator_ID in the header 26 of the NAM Table 200, and AN_ID and Cell_ID in the header 60 of the NCM Table 300. Total_HO_Number in the header of both NAM and NCM Tables is initialized as 0.

If the current AN and cell reported in the ANEmn message are AN B 16 and Cell b2 respectively, the NAM Table of the current AN exists but the NCM Table of the current cell does not exist, only the NCM Table of the current Cell b2 needs to be created and initialized. The following fields are filled with the values reported in the normal ANEmn: AN_ID and Cell_ID in the header of the NCM Table for the current cell. TotaLHO_Number in the header of the NCM Table for this neighboring cell is initialized as 0.

In the following, two parallel processes (steps 710~728 and steps 706~708) need to be executed in order to update the NAM/NCM Table. Process one (steps 710~728) describes how to add new neighboring AN/cell entry to the current AN/cell (i.e. add new Neighbour_AN/Neighbour_Cell sub-table to the current AN/cell's NAM/NCM Table). Process two (steps 706~708) describes how to update the overlapping state of a neighboring AN/cell, which already exists as current AN/cell's neighbor (i.e. Neighbour_ANINeighbour_Cell sub-table of this neighboring AN/cell already exists in the current AN/cell's NAM/NCM Table) before the receipt of this normal ANEmn message.

First, in process one, each AN/cell reported in this normal ANEmn except the current AN/cell is checked if it already exists as current AN/cell's neighbor (step 710). Referring again to FIGs. 5 and 6, suppose that the current AN and cell are AN B and Cell b1 respectively, and the AN E and Cell e1 are reported in the current ANEmn. They have no records in the AN B's NAM 500 and Cell b1's NCM Table 600. Therefore, we add the Neighboring_AN sub-table of AN E to the current AN B's NAM Table 500 and add Neighboring_Cell sub-table of Cell e1 to the current Cell b1's NCM Table 600 (step 712 and 714). We initialize the AN_Type 38, AN_ID 40, Operator_ID 42 and AAA_Cap 52 fields in the Neighboring_AN sub-table or AN_ID 70, Cell_ID 72 and Access_Info 82 in the Neighboring_Cell sub-table with the values reported in the ANEmn message. Moreover, initialize the following fields in the Neighboring_AN/Neighboring_ Cell sub-table: Overlapping_State is set as 'FULLY', HO_Number is set as 0, HO_P is set as 0, and IHI is set as 'NO'.

If the AN/cell has been the neighbour of current AN/cell, then it further checks if Overlapping_State field in the Neighboring_AN/Neighboring_Cell sub-table is 'NONE' (step 716). If Yes, the field 'Overlapping_State' is updated as 'FULLY' (step 718). Otherwise, no update is needed. For instance, AN A has existed in AN B's NAM Table 500, and its Overlapping_State $_{A \rightarrow B}$ is 'FULLY', therefore no update is required.

The relationship of neighbours is mutual. The steps 720 ~ 728 are analogous to the steps 710 ~ 718, described above, except that the steps are performed in the other direction and checked for two neighboring ANs/cells: the previous given AN/cell are checked as the neighbour AN/cell to update the NAM/NCM Tables of its neighbour AN/cell. In our example, referring to FIGs. 4, suppose that the current AN and cell are AN B and Cell b1 respectively, and the AN A and Cell a1 are reported in the current ANEmn, we check the AN A's NAM Table to determine if AN B has recorded in AN A's NAM, and check Cell a1's NCM Table to determine if Cell b1 has recorded in Cell a1's NCM.

In process two (steps 706 - 708), for each AN/cell that has already existed in the Neighbour_AN/Neighbour_ Cell sub-table of the current AN/cell's NAM/NCM Table, the AN/cell is checked to determine whether it is reported in this normal ANEmn message. In our example, the AN B(500)'s Neighbour_AN sub-table(s) and Cell b1 (600)'s Neighbour_ Cell sub-table(s) are checked. If AN A and Cell a1 are not present in the normal ANEmn message, Overlapping_State$_{A \rightarrow B}$ in Neighbour_AN A 84 (FIG. 5) and Overlapping_State $_{a1 \rightarrow b1}$ in Neighbour_Cell a1 86 (FIG. 6) are set as 'PARTIALLY'. Otherwise, no update is needed and next AN/cell is checked until all are finished. Then the process ends at step 730.

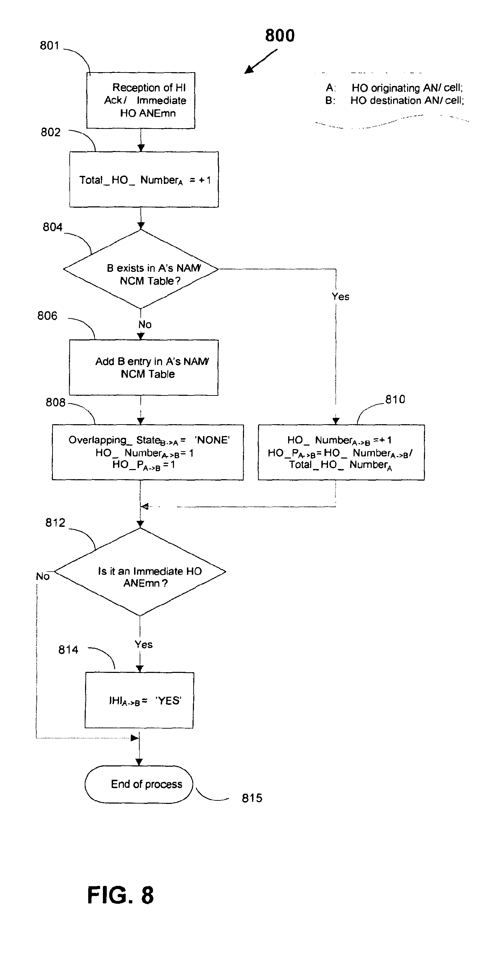

Referring now to FIG. 8, a flow chart 800 illustrates a method for creating and updating NNM upon reception of a HI Ack or an Immediate HO message. For example, the AN/cell A is where the handover originates from (previous 'current' AN/cell before the handover), and the AN/cell B is where the handover terminates in (current AN/cell after the handover).

At the outset, when HI Ack/Immediate HO ANEmn is received (step 801), the Total_HO_Number in the NAM/NCM Table of handover-origination AN/cell A is increased by 1 (step 802). Next, in a step 804, whether the current (handover-destination) AN/cell B is recorded in the Neighbour_AN/Neighbour_Cell sub-table of the previous 'current' (handover-origination) AN/cell A's NAM/NCM Table is checked. If No, then the method 800 creates and adds AN/cell B's Neighbour_AN/ Neighbour_Cell sub-table to A's NAM/NCM Table. Moreover, the following fields are filled with the values reported in the HI Ack/Immediate HO ANEmn: AN_Type, AN_ID, Operator_ID and AAA_Cap in the Neighbour_ AN sub-table of the NAM Table, and AN_ID, Cell_ID and Access_Info in the Neighbour_Cell sub-table of the NCM Table. Thereafter, the following fields in the Neighbour_AN/ Neighbour_Cell sub-table are initialized: Overlapping_State is set as 'NONE', HO_Number is set as 1, HO_P is set as 1 (step 806 and step 808). If the current AN/cell B has already been recorded in the Neighbour_AN/Neighbour_Cell sub-table of AN/cell A, we update the following fields in the Neighbour_ AN/Neighbour_Cell sub-table of the current AN/cell B: HO_Number is increased by 1 and HO_P is set as the updated HO_Number divided by the updated Total_HO_Number (step 810).

Next, the method goes on to a step 812, to determine if this is an Immediate HO ANEmn. If yes, then IHI field in the Neighbour_AN/Neighbour_Cell sub-table of the current AN/cell B in the previous 'current' AN A's NAM/NCM Table is set as 'YES' (step 814). Otherwise, no update is required. Finally, the method ends at step 815.

The contents of the NAM and NCM Table are updated whenever a network measurement or handover complete report is received by the management entity of the NNM. Moreover, the acquisition and access to the NNM is media independent.

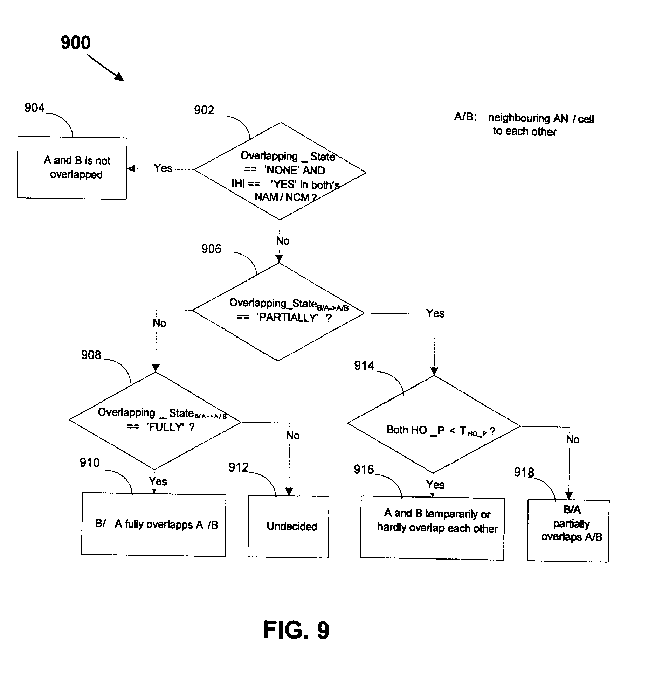

Referring now to FIG. 9, a flow chart 900 illustrates a method for inferring the actual network overlapping information from the proposed pre-decision metrics.

At a step 902, the 'Overlapping_State' and 'IHI' metric values are checked in their NAM/NCM Tables to determine if the two ANs/cells B and A are overlapping. If both have the value of 'NONE' for their 'Overlapping_State' metric and any one of them has the value of 'YES' for its 'IHI' value, this indicates that most likely the two ANs/cells have no common overlapping area (step 904). In this situation, A and B are unwanted neighboring ANs/cells to each other for handover, and any handover attempt most likely will fail or result in packet loss and service interruption. Otherwise, a further check to determine whether the 'Overlapping_State$_{B/A \to A/B}$' is in a PARTIALLY state (step 906) is carried-out. If No, then it continues to step 908. At step 908, the 'Overlapping_State$_{B/A \to A/B}$' value in A/B's NAM/NCM Table is checked to determine whether it is in the 'FULLY' state. If Yes, this indicates that the AN/cell A/B is fully overlapped by the AN/cell B/A (step 910). Otherwise, the case is outstanding and undecided (step 912).

Turning back to the step 906, if the 'Overlapping_State$_{B/A \to A/B}$' is in a 'PARTIALLY' state, the 'Overlapping_ State' and 'HO_P' metric values in their NAM/NCM Tables need to be verified to determine whether the two ANs/cells A and B just temporarily or hardly overlap each other. At a step 914, both of their 'HO_P' values are compared with a pre-defined threshold, e.g., $T_{HO\_P}$. If both 'HO_P' values are lower than the threshold $T_{HO\_P}$, this means that the two ANs/cells are either only temporarily overlapped or permanently overlapped but with little overlapping areas (step 916). This case also suggests that A and B are not the wanted neighboring ANs/cells to each other for handover. Otherwise, at a step 918, the ANs/cell A/B are considered as partially overlapped by the AN/cell B/A.

Given the knowledge of network overlap state and pre-decision metrics, network selection, power management and other system function can become more efficient and intelligent.

For example, as illustrated in FIG. 4, a smart terminal enabled by the enhanced NNM solution in this invention is currently located in the access network B (AN B 58) and its current cell is b1 (Cell b1 92). Now the terminal may turn down some of its interfaces for power saving. By inquiring the AN B 58's NAM Table in the NNM (see AN B's NAM Table 500) via its current connection, the terminal knows that its current AN B 58 has three neighbouring ANs: A 56, C 94 and D 54. However, by checking the 'Overlapping_State' and 'HO_P' fields, the terminal readily knows that the WLAN D 54 has no overlapping area with B 58, and another WLAN C 94 hardly overlaps B 58 and there is little chance that handover can happen from B 58 to C 94.

On the other hand, GSM network A 56 fully overlaps B 58. Therefore, the smart terminal may safely turn off its WLAN interface to save power while keeping its cellular interface open. Due to the hierarchical neighboring information fabric, the terminal has readily made smart power-saving decisions without retrieving the cell-level neighbour information over the air interface.

Moreover, by inquiring B's NAM Table 500, it may be found that there is a 'gap' between the coverage areas of network B 58 and D 54. Such information may be used to improve the network coverage planning needs.

The smart terminal may discover that it is going to lose its current coverage in the WLAN B 58, thus preparing handover by inquiring B's NAM Table 500. Among the three neighbouring networks, since the AN D 54 does not overlap B 58, the terminal avoids any handover to it. Between the remaining candidate networks A 56 and C 94, since C 94 is deduced as hardly overlapped with B 58 and the handover attempt to C 94 is likely fail if the terminal is in A 56, C 94 is also not the reliable network to switch to. Since the AN A 56 fully overlaps B 58 and most of previous handover events occur with the AN A 56 as the destination network if the terminal is located in B 58 (see HOP $_{B \to A}$ = 0.8), it is most likely that handover attempt will succeed if the terminal switches to A 56 next time. So the cellular network A 56 is efficiently chosen as the handover destination network from B 58. Also by checking the 'IHI' field, the terminal knows an immediate handover may happen from B 58 to A 56 (see IHI$_{B \to A}$ = YES), thus preparing well in advance (e.g., proactively opening its cellular interface and performing network registration) for any urgent handover to minimize any interruption to ongoing services. Since handover execution needs detailed information about which cell and physical channel in the network A 56 the terminal should switch into, the terminal further retrieves its current cell b1 92's NCM Table (see

FIG. Cell b1's NCM Table 600) and finds out that the cell a1 90 is the one nearby and should be switched into. Further, after useful access information from the NCM Table, the smart terminal efficiently and quickly switches to the cellular network A 56, without any trouble of searching candidate network as well as cell/channels.

In sum, the novel NNM solution proposed above in the present invention with at least three new handover pre-decision metrics facilitates the development of more intelligent mobility management, power management and other network system functions.

While there has been illustrated and described what are presently considered to be the preferred embodiments of the present invention, it will be understood by those of ordinary skill in the art that various other modifications may be made, and equivalents may be substituted, without departing from the true scope of the present invention.

Additionally, many advanced modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims and their equivalents.

**Claims**

1.  A method of providing an enhanced network neighboring map with at least a two-level hierarchical structure and pre-decision metrics, **characterized in that** the method comprises:

    - storing access network-level and cell-level neighboring information in a neighboring access network map table (200) and neighboring cell map table (300), respectively, which comprise at least a two-level hierarchical network neighboring map table (100);
    - generating and updating the at least two-level hierarchical network neighboring map table upon receipt of normal access network evaluation message and/or a handover instruction acknowledge access network evaluation message and /or an immediate handover access network evaluation message;
    - adding at least one novel information element as pre-decision metrics into the neighboring access network map table and the neighboring cell map table to improve network handover decision; and
    - inferring an actual network overlapping relationship from the pre-decision metrics to determine whether neighboring access network and cells are overlapped when service handover decision, power management and other system functions are requested by a user.

2.  The method of claim 1 wherein the pre-decision metrics comprise an overlapping state (44 and 74), an immediate handover indicator (50 and 80) and a handover probability (48 and 78) indicative of handover occurrence from one network to another.

3.  The method according to claims 1 or 2, wherein the method further comprises:

    - adding a plurality of fields comprising an operator identification field (42), an authentication-authorization-accounting capacity field (52), and an access information field (82) in the normal access network evaluation messages for intelligent handover strategy under heterogeneous network conditions.

4.  The method according to any one of the preceding claims, wherein the method further comprises:

    - using the normal access network evaluation messages as input to construct the at least two-level hierarchical network neighboring map table (100);
    - if upon receipt of the normal access network evaluation messages, a current access network/cell is not present in the at least two-level hierarchical network neighboring map table, then generate the neighboring access network map table and the neighboring cell map table and add to the at least two-level hierarchical network neighboring map table (100);
- update at least one sub-table of the current access network/cell sub-tables (Neighboring_AN/Neighboring_ Cell) using at least two parallel processes.

5. The method according to claim 4, wherein the at least two parallel processes comprise:

- a process one (step 710~728), which determines the status of each neighbour reported in the normal access network evaluation message, and
- if the status of each neighbour is not found in the current access network/cell sub-tables (28 and 62), then generating and initializing the current access network/cell's sub-table entries for the neighbour access network/ cell, and add to the current access network/cell's neighboring access network map table (200) and the neighboring cell map table (300); and
- if the status of each neighbour is found in the current access network/cell sub-tables (28 and 62), then updating the overlapping state field from 'none' to 'fully' in the current access network/cell sub-tables (28 and 62).

6. The method according to claims 4 and 5, wherein the at least two parallel processes comprise a process two (step 706~708), which determines each existed neighbor in the current access network/cell sub-tables (28 and 62) if reported in the normal access network evaluation message, and if not present, updating the overlapping state field in the current access network/cell sub-tables as 'partially'.

7. The method according to any one of the preceding claims, further comprising verifying fields of the overlapping state (44/74), the Immediate Handover Indicator (50/80) and a handover probability (48/78) of the neighboring access network map table (200) and the neighboring cell map table (300) of neighboring access network/cell to infer the actual network overlapping relationship from the pre-decision metrics.

8. The method according to any one of the preceding claims, further comprising:

- generating and updating the at least two-level hierarchical network neighboring map table (100) upon receipt of a handover instruction acknowledge access network evaluation message and /or an immediate handover access network evaluation message;
- increasing a total hand over number (36/68) of a handover-origination access network/cell by 1;
- if a handover-destination access network/cell is not found in handover-origination access network/cell sub-tables (28/62), then generating and initializing handover-origination access network/cell's sub-table entries for the handover-destination access network/cell (806~808);
- increasing a hand over number (46/76) by 1 and updating a handover probability (48/78) of handover-origination access network/cell's sub-table entries for the handover-destination access network/cell; and
- updating an Immediate Handover Indicator (50/80) of handover-origination access network/cell's sub-table entries for the handover-destination access network/cell, if it is the immediate handover access network evaluation message.

9. The method according to any one of the preceding claims, wherein each neighboring cell map belonging to one access network is associated with the neighboring access network map by the index of a unique access network identifier for enabling information access efficiency and reducing air-interface resources consumption.

10. A computer readable medium associated with a device having a sequence of instructions stored thereon which, when executed by a microprocessor of the device, causes the processor to implement the steps of the method according to claims 1-9.

11. A network entity configured to provide an enhanced network neighboring map with at least a two-level hierarchical structure and pre-decision metrics, said network entity comprising:

- means for storing access network-level and cell-level neighboring information in a neighboring access network map table (200) and neighboring cell map table (300), respectively, which comprise at least a two-level hierarchical network neighboring map table (100);
- means for generating and updating the at least two-level hierarchical network neighboring map table upon receipt of normal access network evaluation message and/or a handover instruction acknowledge access network evaluation message and /or an immediate handover access network evaluation message;

- means for adding at least one novel information element as pre-decision metrics into the neighboring access network map table and the neighboring cell map table to improve network handover decision; and

- means for inferring an actual network overlapping relationship from the pre-decision metrics to determine whether neighboring access network and cells are overlapped when service handover decision, power management and other system functions are requested by a user.

12. A system configured to provide an enhanced network neighboring map with an at least two-level hierarchical structure and pre-decision metrics, said system comprising a neighboring access network map table (200) for storing access network-level information and a neighboring cell map table (300) for storing cell-level neighboring information, and which comprise at least a two-level hierarchical network neighboring map table (100).

13. The system of claim 12, wherein the at least a two-level hierarchical network neighboring map table (100) is configured to generate and update upon receipt of a normal access network evaluation message and/or a handover instruction acknowledge access network evaluation message and/or an immediate handover access network evaluation message.

14. The system of claim 12 or 13, wherein the at least a two-level hierarchical network neighboring map table (100) is further configured to add at least one novel information element as pre-decision metrics into the neighboring access network map table and the neighboring cell map table to improve network handover decision, and infer an actual network overlapping relationship from the pre-decision metrics to determine whether neighboring access network and cells are overlapped when service handover decision, power management and other system functions are requested by a user.

**Two-level hierarchical NNM  100**

AN-level Neighbour Information

| AN A's NAM Table  14 | AN B's NAM Table  16 | AN C's NAM Table  18 |

10

12

Cell a1's NCM Table  20

Cell a2's NCM Table  22

Cell a3's NCM Table  24

Cell b1's NCM Table

Cell c1's NCM Table

Cell c2's NCM Table

Cell-level Neighbour Information

FIG. 1

EP 1 933 576 A1

10

**AN A's NAM Table 200**

NAM's header 26

| AN_Type A 30 | AN_ID A 32 | Operator_ID A 34 | Total_HO_Number$_A$ 36 |
|---|---|---|---|

| AN_Type B | | AN_Type C | 38 |
|---|---|---|---|
| AN_ID B | | AN_ID C | 40 |
| Operator_ID B | | Operator_ID C | 42 |
| Overlapping_State $_{B \to A}$ | | Overlapping_State $_{C \to A}$ | 44 |
| HO_Number $_{A \to B}$ | | HO_Number $_{A \to C}$ | 46 |
| HO_P $_{A \to B}$ | | HO_P $_{A \to C}$ | 48 |
| IHI $_{A \to B}$ | | IHI $_{A \to C}$ | 50 |
| AAA_Cap B | | AAA_Cap C | 52 |

• • •

Neighbour_AN B

Neighbour_AN C

NAM's Neighbour_AN
sub-tables 28

**FIG. 2**

**Cell a1's NCM Table  300**

NCM's header 60

| AN_ID A   64 | Cell_ID a1   66 | Total_HO_Number$_{a1}$   68 |
|---|---|---|

| AN_ID B |
|---|
| Cell_ID b1 |
| Overlapping_State $_{b1 \to a1}$ |
| HO_Number $_{a1 \to b1}$ |
| HO_P $_{a1 \to b1}$ |
| IHI $_{a1 \to b1}$ |
| Access_Info $_{b1}$ |

| AN_ID C   70 |
|---|
| Cell_ID c1   72 |
| Overlapping_State $_{c1 \to a1}$ 74 |
| HO_Number $_{a1 \to c1}$ 76 |
| HO_P $_{a1 \to c1}$   78 |
| IHI $_{a1 \to c1}$   80 |
| Access_Info$_{c1}$   82 |

• • •

Neighbour_Cell b

Neighbour_Cell c

NCM's Neighbour_Cell

sub-tables 62

FIG. 3

12

neighbouring ANs/cells for a given AN/cell B/b1 400

**FIG. 4**

AN D 54
Cell d1

AN B 58
Cell b1 92

AN C 94
Cell c1

Cell a1 90

AN A 56

Cell a3

Cell a2

**AN B's NAM Table 500**

| AN_Type: 802.16 | AN_ID: WMAN-1 | Operator_ID: Orange | Total_HO_Number:10 |
|---|---|---|---|

| AN_Type: Cellular | 802.11a WLAN | 802.11g WLAN |
|---|---|---|
| AN_ID: 23433 | AN_ID: PublicWLAN-3 | AN_ID: Public WLAN-18 |
| Operator_ID: Orange | Operator_ID: STARBUCK | Operator_ID: NERO |
| Overlapping_State$_{A \to B}$: FULLY | Overlapping_State $_{C \to B}$: PARTIALLY | Overlapping_State $_{D \to B}$: NONE |
| HO_Number$_{B \to A}$ : 8 | HO_Number $_{B \to C}$ : 1 | HO_Number $_{B \to D}$ : 1 |
| HO_P$_{B \to A}$: 0.8 | HO_P$_{B \to C}$ : 0.1 | HO_P$_{B \to D}$ : 0.1 |
| IHI$_{B \to A}$: YES | IHI $_{B \to C}$: NO | IHI $_{B \to D}$: YES |
| AAA_Cap$_A$: 3GPP | AAA_Cap$_C$: WEP | AAA_Cap$_D$:WEP |

Neighbour_AN A  84    Neighbour_AN C    Neighbour_AN D

**FIG. 5**

EP 1 933 576 A1

EP 1 933 576 A1

**Cell b1's NCM Table   600**

| AN_ID: WMAN-1 | Cell_ID: Org-AP-01 | Total_HO_Number: 10 |

**Neighbour_Cell a1   86**

| AN_ID: 23433 |
| Cell_ID: 3G-Cell#1 |
| Overlapping_State$_{a1 \to b1}$: FULLY |
| HO_Number$_{b1 \to a1}$: 8 |
| HO_P$_{b1 \to a1}$: 0.8 |
| IHI$_{b1 \to a1}$: YES |
| Access_Info$_{a1}$: BCCH#1 |

**Neighbour_Cell c1**

| AN_ID: PublicWLAN-3 |
| Cell_ID: STAR-AP-01 |
| Overlapping_State$_{c1 \to b1}$: PARTIALLY |
| HO_Number$_{b1 \to c1}$: 1 |
| HO_P$_{b1 \to c1}$: 0.1 |
| IHI$_{b1 \to c1}$: NO |
| Access_Info$_{c1}$: CH#2 |

**Neighbour_Cell d1**

| AN_ID: PublicWLAN-18 |
| Cell_ID: NERO-AP-05 |
| Overlapping_State$_{d1 \to b1}$: NONE |
| HO_Number$_{b1 \to d1}$: 1 |
| HO_P$_{b1 \to d1}$: 0.1 |
| IHI$_{b1 \to d1}$: YES |
| Access_Info$_{d1}$: CH#2 |

**FIG. 6**

A:  Current AN/ cell;
B:  Other nearby AN/ cell
     reported in normal ANEmn;
C:  Existing neighbour AN/
     cell entry in A's NAM/ NCM

701

**700**

Reception of
normal ANEmn

702

A's NAM/ NCM Table
exists? ──── No ──── 704

Create A's NAM/ NCM Table
Total_HO_ Number$_A$ = 0

Yes

706

710

712

C exists in this normal
ANEmn?

B exists in A's NAM/
NCM Table? ──── No ────

Add B entry in A's NAM/
NCM Table

**For
each C
in A's
NAM/
NCM
Table**

708

No

716

Yes

Overlapping_ State$_{C->A}$
= 'PARTIALLY'

Overlapping_ State$_{B->A}$ = 'FULLY'
HO_ Number$_{A->B}$ = 0
HO_ P$_{A->B}$ = 0
IHI$_{A->B}$ = 'NO'

Yes

Overlapping_ State$_{B->A}$
== 'NONE? ──── No ────

714

718

Yes

Overlapping_ State$_{B->A}$
= 'FULLY'

**For
each B
in this
normal
ANEmn**

720

726

A exists in B's NAM/
NCM Table? ──── No ────

Add A entry in B's NAM/
NCM Table

722

Yes

Overlapping_ State$_{A->B}$ = 'FULLY'
HO_ Number$_{B->A}$ = 0
HO_ P$_{B->A}$ = 0
IHI$_{B->A}$ = 'NO'

Overlapping_ State$_{A->B}$
== 'NONE? ──── No ────

724

Yes

728

Overlapping_ State$_{A->B}$
= 'FULLY'

End of process

730

**FIG. 7**

**800**

801 — Reception of HI Ack/ Immediate HO ANEmn

802 — Total_HO_ Number$_A$ = +1

804 — B exists in A's NAM/ NCM Table?

810 — HO_ Number$_{A->B}$ =+1
HO_P$_{A->B}$=HO_ Number$_{A->B}$/ Total_HO_ Number$_A$

806 — Add B entry in A's NAM/ NCM Table

808 — Overlapping_ State$_{B->A}$ = 'NONE'
HO_ Number$_{A->B}$= 1
HO_P$_{A->B}$ =1

Yes

No

812 — Is it an Immediate HO ANEmn?

No

Yes

814 — IHI$_{A->B}$ = 'YES'

End of process — 815

A: HO originating AN/ cell;
B: HO destination AN/ cell;

# FIG. 8

**900**

904
A and B is not overlapped

◄──Yes────

902
Overlapping _ State
== 'NONE' AND
IHI == 'YES' in both's
NAM / NCM ?

A/B:   neighbouring AN / cell
to each other

No

906
Overlapping_State$_{B/A \to A/B}$
== 'PARTIALLY' ?

No ──────── Yes

908
Overlapping _ State$_{B/A \to A/B}$
== 'FULLY' ?

914
Both HO _ P < T$_{HO\_P}$ ?

No

Yes

No

910
Yes

912

916
Yes

918

B/ A fully overlapps A /B

Undecided

A and B tempararily or
hardly overlap each other

B/A
partially
overlaps A/B

**FIG. 9**

European Patent
Office

**EUROPEAN SEARCH REPORT**

Application Number

EP 06 29 1938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 681 889 A (FRANCE TELECOM [FR]) 19 July 2006 (2006-07-19) <br> * abstract * <br> * paragraphs [0001], [0009] - [0012], [0018] * <br> * paragraphs [0019], [0022], [0033] - [0038] * <br> * paragraphs [0041], [0046] - [0048], [0053] * <br> * paragraphs [0058], [0059], [0061], [0066] * <br> * paragraphs [0068] - [0070] * <br> * claims 1,7; figures 3,4 * <br> ----- | 1-14 | INV. <br> H04Q7/38 |
| A | EP 1 339 250 A (DOCOMO COMM LAB USA INC [US]) 27 August 2003 (2003-08-27) <br> * abstract * <br> * paragraphs [0002], [0012] - [0014], [0017] * <br> * paragraphs [0020] - [0034], [0038] * <br> * paragraphs [0039], [0054], [0055] * <br> * paragraphs [0057], [0060] * <br> * figures 4,6,7 * <br> ----- | 1-14 | |
| A | EP 1 335 528 A (DOCOMO COMM LAB USA INC [US]) 13 August 2003 (2003-08-13) <br> * abstract * <br> * paragraphs [0002], [0010] - [0018], [0023] * <br> * paragraphs [0024], [0028], [0029] * <br> * paragraphs [0031] - [0034] * <br> * figures 1,4,6,7 * <br> ----- <br><br> -/-- | 1-14 | TECHNICAL FIELDS SEARCHED (IPC) <br><br> H04Q |

The present search report has been drawn up for all claims

| Place of search | Date of completion of the search | Examiner |
|---|---|---|
| Berlin | 10 May 2007 | ALONSO MALETA, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**European Patent Office**

**EUROPEAN SEARCH REPORT**

Application Number

EP 06 29 1938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/288017 A1 (DOUMENC DIDIER [FR] ET AL) 29 December 2005 (2005-12-29)<br>* abstract *<br>* paragraphs [0001], [0004], [0010] - [0016] *<br>* paragraphs [0021], [0026], [0027] *<br>* paragraphs [0030], [0034] - [0036] *<br>* paragraphs [0057] - [0063], [0069] *<br>* paragraphs [0070], [0077], [0080] *<br>* claims 1,2 * | 1-14 | |
| A | US 2004/092259 A1 (BLANC PATRICK [FR] ET AL) 13 May 2004 (2004-05-13)<br>* abstract *<br>* paragraphs [0010], [0027] - [0030] *<br>* paragraphs [0048] - [0050], [0058] *<br>* paragraphs [0059], [0063], [0071] - [0088] * | 1-14 | |

TECHNICAL FIELDS
SEARCHED (IPC)

The present search report has been drawn up for all claims

| Place of search | Date of completion of the search | Examiner |
|---|---|---|
| Berlin | 10 May 2007 | ALONSO MALETA, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 29 1938

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2007

| Patent document cited in search report | | Publication date | Patent family member(s) | | Publication date |
|---|---|---|---|---|---|
| EP 1681889 | A | 19-07-2006 | WO | 2006074800 A1 | 20-07-2006 |
| EP 1339250 | A | 27-08-2003 | JP | 2003284117 A | 03-10-2003 |
| | | | US | 2003148777 A1 | 07-08-2003 |
| EP 1335528 | A | 13-08-2003 | JP | 2003258720 A | 12-09-2003 |
| | | | US | 2003147364 A1 | 07-08-2003 |
| US 2005288017 | A1 | 29-12-2005 | CN | 1713774 A | 28-12-2005 |
| | | | EP | 1610584 A1 | 28-12-2005 |
| | | | FR | 2871980 A1 | 23-12-2005 |
| | | | JP | 2006014320 A | 12-01-2006 |
| | | | KR | 20060049637 A | 19-05-2006 |
| US 2004092259 | A1 | 13-05-2004 | CN | 1502213 A | 02-06-2004 |
| | | | EP | 1246499 A1 | 02-10-2002 |
| | | | FR | 2823053 A1 | 04-10-2002 |
| | | | WO | 02080607 A1 | 10-10-2002 |
| | | | JP | 2004522348 T | 22-07-2004 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0933954 A
- EP 1427234 A
- EP 05290089 A